# EUROPEAN PATENT SPECIFICATION

(11) **EP 1 313 374 B1**
(45) Date of publication and mention of the grant of the patent: **05.04.2006**
(21) Application number: 01962960.9
(22) Date of filing: 21.08.2001
(51) Int. Cl.: A23G 9/50, A23G 9/14, A23G 9/28

(54) **A FROZEN CONFECTIONERY PRODUCT AND METHOD OF MANUFACTURE**
GEFRORENE SÜSSWAREN UND HERSTELLUNGSVERFAHREN
PRODUIT SUCRE GLACE ET SON PROCEDE DE FABRICATION

(30) Priority: 25.08.2000 AU PQ975800
(43) Date of publication of application: 28.05.2003
(73) Proprietor: Société des Produits Nestlé S.A., 1800 Vevey (CH)
(72) Inventor: PRITCHARD, Tom, Dublin, OH 43016 (US); PERRY, Johnattan, Au-Eltham, VIC 3061 (AU); ROBERTS, Keith, Dublin, OH 43016 (US)
(74) Representative: Archambault, Jean
(86) International application number: PCT/EP2001/009647
(87) International publication number: WO 2002/015706

(56) References cited:
- EP-A- 0 278 575
- EP-A- 0 948 899
- WO-A-99/18011
- DE-U- 29 713 517
- FR-A- 2 665 692
- GB-A- 1 017 480
- GB-A- 1 417 125
- US-A- 1 337 195
- US-A- 3 923 200
- US-A- 4 188 768
- US-A- 4 239 175
- US-A- 4 789 552
- US-A- 4 813 862
- US-A- 5 322 432
- PATENT ABSTRACTS OF JAPAN vol. 007, no. 039 (C-151), 17 February 1983 (1983-02-17) & JP 57 189645 A (MASAMI ARAKI), 22 November 1982 (1982-11-22)

## Description

### FIELD OF THE INVENTION

The present invention relates to frozen confectionery products. It also relates to a method and apparatus for the manufacture of such products.

### BACKGROUND OF THE INVENTION

Many confectionery products are known. Increasingly, there is a consumer demand for composite products formed from different edible materials in complementary combinations. One desirable combination is ice cream and chocolate combinations of ice cream and chocolate are known in the art, for example GB 1 017 480 (Fig. 14), or EP-A-0 278 575. There are, however, significant production and packaging difficulties involved in the integration and packaging of these materials in various shapes and sizes to produce interesting new products in a consistent and cost-effective manner.

One known method of forming chocolate based confectionery products involves pouring or spraying molten chocolate into a female mould, and then pouring off the excess such that the residual material hardens around the inner surface of the mould, and can be removed as a self-supporting chocolate shell. One disadvantage of this technique is that it is highly dependent upon the viscosity of the molten chocolate, which can vary with composition, as well as temperature and ambient humidity. This makes it difficult to regulate precisely how much material adheres to the mould, and hence the amount of excess material that will be poured off. Consequently, it is difficult to predict the rate at which the chocolate will be consumed in the production process as well as the wall thickness and mass of the finished product. A further problem is that the method often gives rise to a non-uniform wall thickness in the product, due to the pooling of molten chocolate toward the lowermost part of the mould.

In an attempt to address these problems, it is also known to form confectionery products based on chocolate and similar materials in a two-part mould. In this case, the two mould halves are joined together to form a substantially sealed cavity of desired shape. The molten chocolate is then injected under pressure into the cavity and upon cooling, the mould is opened to release the finished product.

In other variations of this method, the mould is spun to distribute the chocolate relatively thinly around the inner surface, under the influence of centrifugal force.

While effective in some respects, neither of these methods is suitable for producing an open-ended confectionery item moulded directly into a protective wrapper, because it is difficult to incorporate the wrapper effectively into the moulding process without damage or discolouration. Incorporation of the wrapper into the moulding process is desirable, however, in terms of production efficiency. It also assists to prevent damage to and contamination of the exposed product, prior to wrapping.

It is an object of the present intention to overcome or ameliorate at least one of the disadvantages of the prior art, or at least to provide a useful alternative.

### SUMMARY OF THE INVENTION

In a first aspect, the invention provides a composite frozen confectionery item including:
- a cone, truncated cone or cup shaped shell formed from a solid fat based composition and nestingly contained substantially within a close fitting protective packaging sheet of corresponding shape, the shell and packaging sheet each having an open end and a closed end and the shell forming a lining in substantially contiguous contact with an internal surface of the packaging sheet and
- a filling of ice confectionery up to a position adjacent the open end of the packaging sheet and extending beside the length of the shell and at least in part of its periphery being in contact with an internal surface of the packaging sheet.

In a second aspect, the invention provides a method for producing a composite frozen confectionery item as described above comprising an open ended cone, truncated cone or cup shaped confectionery item in a protective packaging sheet, said method including the steps of:
configuring the protective packaging sheet as a receptacle having an open end and a closed end;
supporting the receptacle with the open end disposed above the closed end; introducing a predetermined amount of edible molten confectionery material into the receptacle through the open end and permitting it to settle toward the closed end;
introducing a correspondingly shaped male die into the open end of the receptacle so as to displace the molten material around at least part of an interior surface of the receptacle;
cooling the molten material until it partially solidifies in the form of a shell; and
removing the die to reveal the confectionery item contained within the protective packaging sheet.

In a third aspect, the invention provides an apparatus for producing an open ended confectionery item in a protective packaging sheet, said apparatus including:
support means for supporting a packaging sheet having an open end and a closed end as a receptacle with the open end located above the closed end;
injecting means for introducing a predetermined amount of molten edible material into the receptacle through the open end so that it settles toward the closed end;
a correspondingly shaped male die adapted removably for insertion into the open end of the receptacle so as to displace the molten material around at least part of an interior surface of the receptacle; and
cooling means for cooling the molten material until it substantially solidifies in the form of a shell.

In a fourth aspect, the invention concerns the use of the shaped shell in the packaging sheet in the place of a sugar wafer in the production of ice confectionery articles, which comprises filling the shell in the packaging sheet with ice confectionery, placing a decorative topping and closing the package with a lid.

### DETAILED DESCRIPTION OF THE INVENTION

Preferably, the method includes the further step of nesting the receptacle within a complementary female support die such that at least part of an outer surface of the receptacle adjacent the closed end is in contiguous surface contact with a corresponding inner surface of the support die.

Preferably, the female die is configured to support substantially the full extent of the shell.

Preferably, the male and female dies are concurrently brought into contact with the molten material and the packaging sheet respectively.

The packaging sheet, the dies and the shell are each substantially in the same shape.

It can be a cone, with the apex of the receptacle defining the closed end.

As an alternative, it can be a truncated cone, preferably and elongated truncated cone with the base defining the closed end.

As a further alternative, it can be a cup, preferably representing the shape of a flower cup or corolla, with a curvated side wall of convex, concave or convex-concave shape with the base defining the closed end.

The filling extends beside the length of the shell and is at least in part of its periphery in contact with an internal surface of the packaging sheet.

While the packaging sheet may end with a substantially circular edge at its open end, the confectionery lining may end as a sinuous edge and thus represent a flower cup or corolla with its petals.

The solid composition forming the shell comprises a confectionery fat. Under confectionery fat it is understood in the context of this specification a confectionery coating, including chocolate coating and "compound" coating comprising a vegetable fat or fraction, possibly hydrogenated or a mixture of such fats and fractions. Such a solid composition may contain sugar or milk solids as is the case for chocolate. The chocolate may be dark, milk or white chocolate .

The solid composition forming the shell may be homogeneous or composed of differently flavoured and coloured chocolates, e.g. milk and white chocolate filled side by side or slightly stirred together for providing a marbling or ripple effect. The solid composition may be aerated. The solid composition may further contain inclusions of sugar confectionery, such as e.g. gels, marshmallow, fudge or pieces of preserved fruit, nuts, toasted, puffed or roasted cereals or biscuit crumbs.

The confectionery fat constitutes a continuous layer or phase in the solid composition of the shell which is in contact with the internal wall of the receptacle.

The packaging sheet and the shell are each in the shape of a cone, with the respective apices defining the closed ends, or of a truncated cone or of a cup with substantially planar bottom.

Such a packaging sheet may be made from a laminate material, such as e.g. aluminium backed paper, that is formed and bonded into a receptacle.

In the case of a truncated cone or of a cup, the bottom can be closed by folding the wrapper sheet. Alternatively a paper, cardboard or plastic disc can be placed at the bottom and bonded to the side wall. The package can be made from paper, cardboard or plastic.

Preferably, the apparatus further includes a complementary female support die for nestingly supporting the receptacle so that at least part of an outer surface of the receptacle adjacent the closed end is in substantially contiguous contact with a corresponding inner surface of the support die.

Preferably, the female die is configured to support substantially the full extent of the shell when formed.

### BRIEF DESCRIPTION OF THE DRAWINGS

Preferred embodiments of the invention will now be described, by way of example only, with reference to the accompanying drawings in which:
Figure 1 is a perspective view showing a confectionery product including a solid edible shell within a complementary packaging sheet according to the invention;
Figure 2, a to h are a sequence of schematic representations depicting the method and apparatus according to the invention;
Figure 3 is an enlarged cross-sectional view showing the receptacle and solid shell within the female die according to the method of the invention;
Figure 4 is a perspective view of a first embodiment of a composite confectionery product, comprising a solid edible shell and ice-cream filling within a complementary conical wrapper and top closure according to the invention;
Figure 5 is a diagrammatic side elevation showing an apparatus for implementing the method of the present invention in continuous mass production;
Figure 6 is a diagrammatic front elevation of the production apparatus of Figure 5 and
Figure 7 is a perspective view of a further embodiment of a composite confectionery product representing a flower cup, comprising a shell and ice confectionery filling with decorative topping, the packaging not being represented.

### DETAILED DESCRIPTION OF PREFERRED EMBODIMENTS

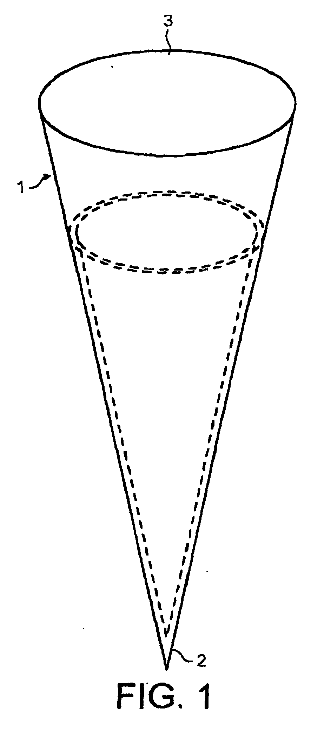

Referring initially to Figure 1, in implementing the method of the present invention, a protective wrapper is initially configured from laminated sheet material as a receptacle or sleeve 1. The laminate is formed from waxed paper with a metal foil flavour barrier. It also incorporates decorative labelling. It will be appreciated that in other embodiments, the wrapper may include paper, waxed paper, foil or plastics individually or in combination, and in laminate or other form and shapes.

The sheet material is rolled and bonded into the shape of an inverted cone with the apex at the bottom to define a closed end 2, and the sides diverging upwardly to define an open top 3. The apex of the cone defines an included angle of between 15° and around 45°, preferably between 20° and around 30°, and ideally around 23 °.

The height of the receptacle, when measured from the apex to the open end, is preferably between 100mm and around 250mm, more preferably between 150mm and around 200mm, and ideally around 170mm. In other embodiments, the receptacle may be shaped differently altogether, for example as an elongated truncated cone.

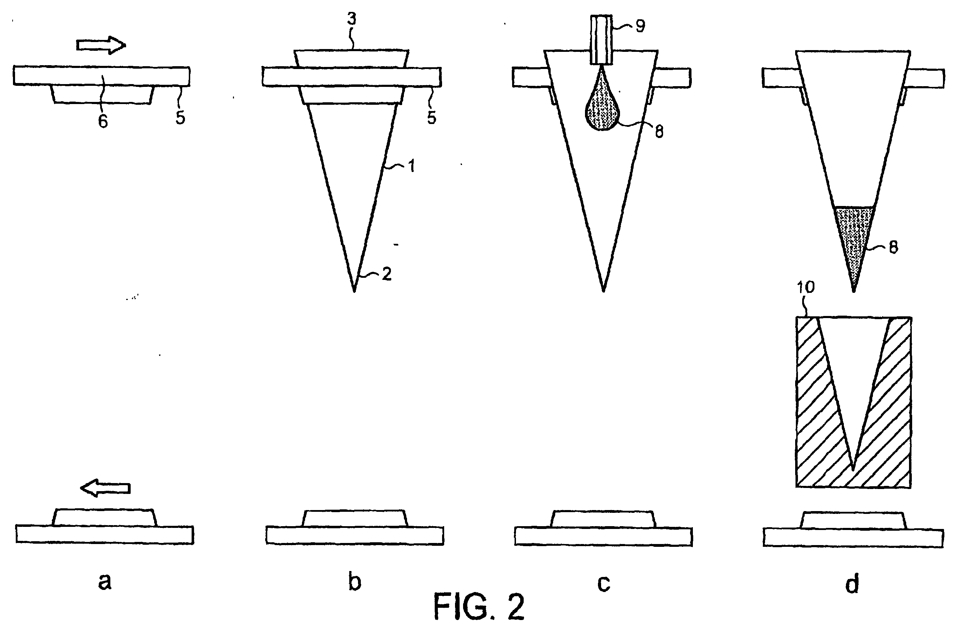

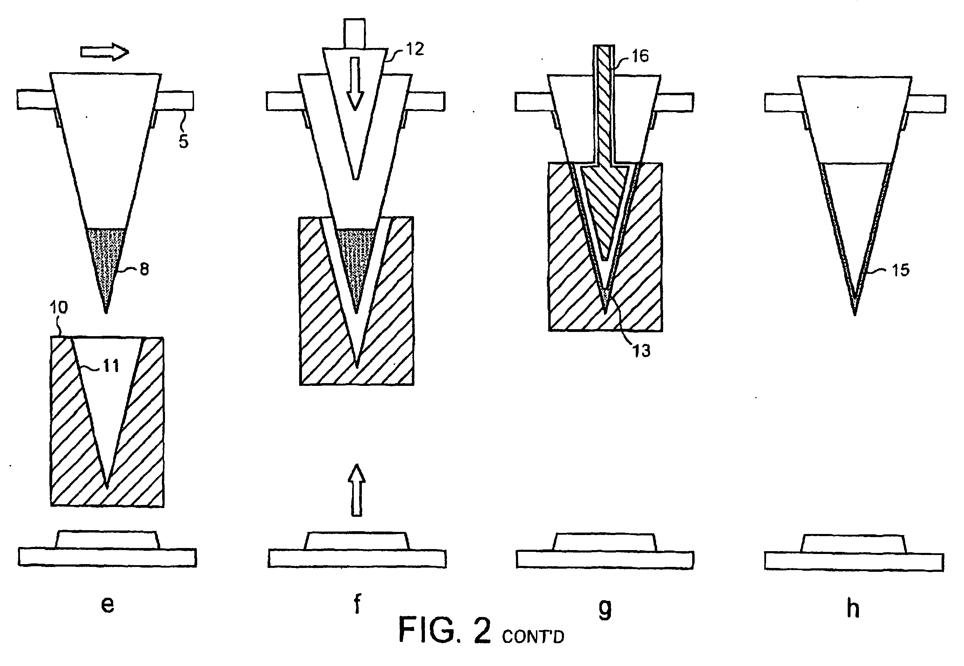

As shown in Figure 2, a and b, the receptacle is supported by an annular holder 5 with the open end 3 disposed above the closed end 2. In this embodiment, the holder defines a circular aperture 6 which is smaller in diameter than the outside diameter of the open end of the receptacle, thereby allowing the cone to sit securely within the holder.

As shown in Figure 2, c and d, a predetermined amount of molten chocolate 8 is then introduced via an injection nozzle 9 into the receptacle through the open end so as to accumulate toward the closed end. In other embodiments, molten chocolate may be partly replaced by any suitable liquid or viscous edible product which undergoes a change to a substantially solid state under the influence of temperature or due to a chemical reaction. Examples include fat based products, fruit based gum products, biscuit/cookies mixes, sugar based products, and gelatine products such as jellies.

In further embodiments, other complementary food products such as nuts or mint chips may be introduced into the receptacle as inclusions, during, before or after the molten or viscous product is introduced.

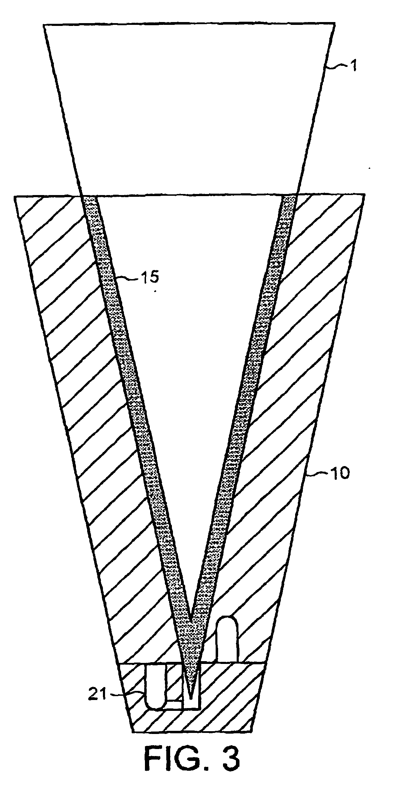

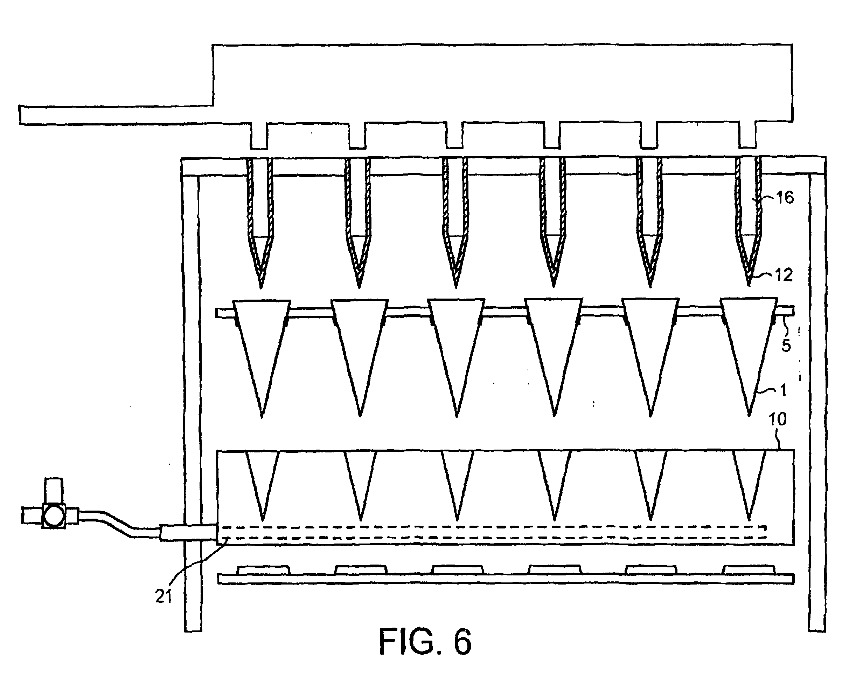

As shown in Figure 2, d to f, the receptacle formed from the wrapper is then nestingly supported in a female die 10. The female die defines a complementary cone shaped recess 11 adapted such that a substantial part of the outside surface of the receptacle toward the closed end is in contiguous contact with the corresponding inner surface of the female die (see Figure 3). The female die, like the receptacle, converges downwardly from an open top to a bottom apex. As best seen in Figure 3, the female die further includes a conduit at the apex to allow for the expulsion of air which otherwise may become trapped between the receptacle and die. As shown in Figure 6, the conduit is preferably connected to a vacuum source to ensure that the air is expelled. This also helps to retain the receptacle firmly within the female die.

As shown in Figure 2, f, when the female die is engaged with the receptacle from below, a correspondingly shaped conical male die 12 is simultaneously introduced from above into the open end of the receptacle. The male die is then progressively advanced downwardly into the molten chocolate, so as to displace it around at least the lower part of the inside surface of the receptacle. The molten chocolate thereby forms a layer 13 of substantially uniform thickness between the inside surface of the receptacle and the outside surface of the male die, as best shown in Figure 2, g.

In this embodiment, the male and female dies are engaged simultaneously. However, in other forms, the male die may not be introduced until after the receptacle is supported within the female die. In further variations, no female die is used and the receptacle itself is designed to have sufficient integrity and strength to maintain its shape upon application of the male die. In yet further variations, the female die may also perform the function of the holder, or vice versa.

The height and the thickness are accurately controlled by selecting the amount of chocolate added and the extent to which the male die is advanced into the receptacle. The height of the chocolate layer 13, when measured from the bottom apex to the open end, is preferably between 50 mm and around 150 mm, more preferably between 100 mm and around 120 mm, and ideally around 108 mm.

The female die is ideally configured so that the level of the displaced chocolate does not rise above the level of the open end of the die. Similarly, the arrangement is ideally configured so that the displaced chocolate does not rise above the upper marginal edge of the male die. In this embodiment the angles defined by the cones or apexes of the receptacle and male and female dies are substantially the same, however in alternative embodiments, variations between these angles may be used. Similarly, in still further embodiments, the size and shape of the clearance space between the female die and the male die may be varied intentionally to provide a shell with an uneven wall thickness.

With the chocolate layer at the predetermined thickness, it is rapidly cooled so as to solidify into a shell 15. This is achieved by cooling the male die which, as seen in Figure 2, g, includes an internal fluid passageway or reservoir 16 to allow the introduction of a cooling fluid, e.g. brine. The fluid is introduced at a temperature below the melting point of the chocolate and cools the die, which in turn cools the chocolate sufficiently for it to partially solidify and retain its shape. Although this embodiment uses a cooling solution, it will be appreciated that the solution can be replaced by another cooling medium, for example, liquid CO₂ or liquid N₂ or a cooling gas or mixtures of cooling liquids and gases. It will further be appreciated that the female die can additionally or alternatively be cooled in a similar fashion, with substantially the same effect.

It will also be appreciated that additional layers of the shell may be built up sequentially by repeating the steps of the method as outlined above. These subsequent layers may be formed from the same material, or from a different material such as caramel, for example.

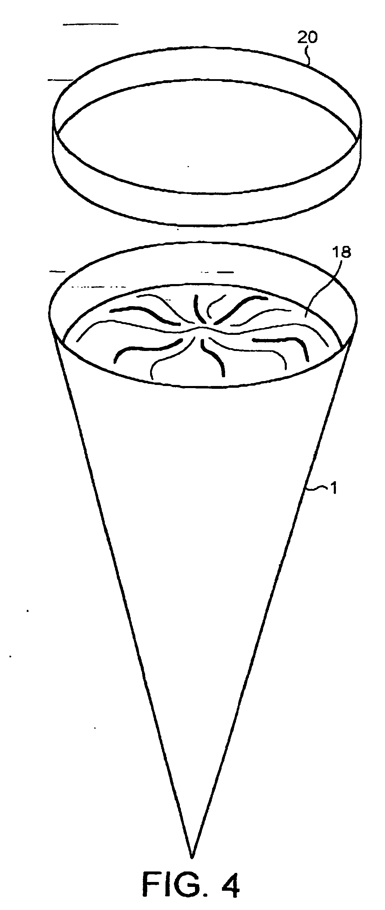

Once the chocolate has solidified into a shell, the male and female dies are separated to reveal the chocolate shell 15 contained within the protective wrapper (see Figure 2, h and Figure 3). The shell and protective wrapper are then substantially filled with ice-cream 18 to form a composite ice confection (see Figure 4). Nuts, chocolate chips and/or flavoured toppings may also be applied to or with the ice confection at this stage.

In other embodiments, the ice-cream may be substituted by any other suitable, edible filling materials, e.g. sorbet or water ice, preferably aerated and of similar texture to that of an ice cream.

The frozen composition constituting the center, depending on its hardness and texture, can be filled under pressure through a nozzle and a decor can be created, e.g. simulating a rose. Possibly filling may be done under rotation to obtain a decorative aspect of the top.

Finally, a removable closure 20 is applied to the open end of the receptacle to seal the chocolate ice-cream confection within the protective wrapper. In another embodiment, the closure may be a dome shaped lid, possibly transparent and clipped over the packaging wrapper upper rim.

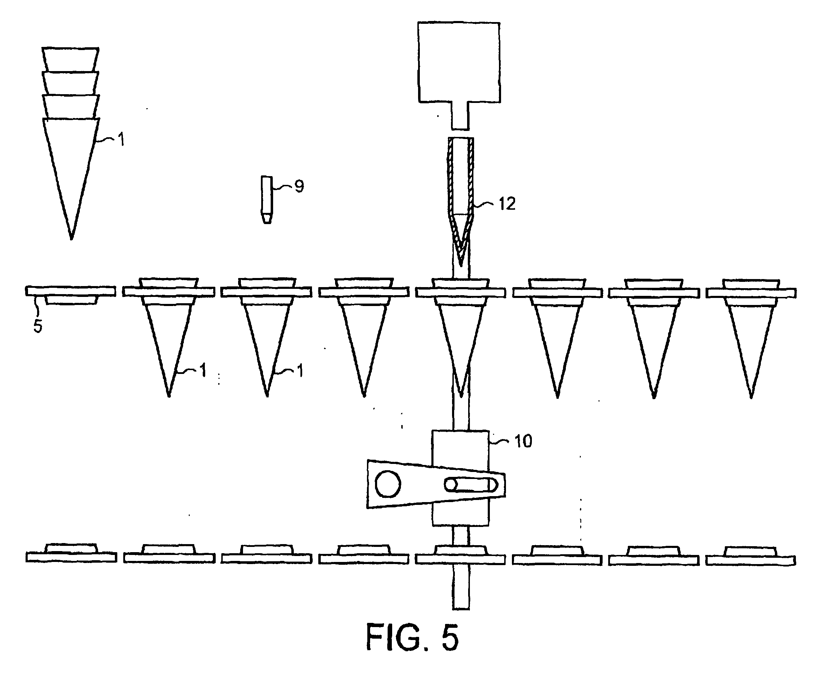

In use, the method is adapted for continuous multiple operation. This is shown in Figure 5 where the method is applied in a production line. The line is indexed, and includes a number of stations and an automated conveyer transporting the receptacles, supported by their respective holders. The line pauses at each station before proceeding to the next. Initially the receptacles move past a station where the injection nozzle 9 introduces molten chocolate. The line then proceeds to another station where the male and female dies are applied before the chocolate is cooled. The line then proceeds to add ice-cream and apply the closure (not shown). In other embodiments more stations may be include to add complementary edible material or repeat the shell forming process. A schematic representation of the end view of multiple production lines is shown in Figure 6. As shown in Figures 3 and 6, excess chocolate at the bottom of the female die may be collected and recirculated by the duct 21.

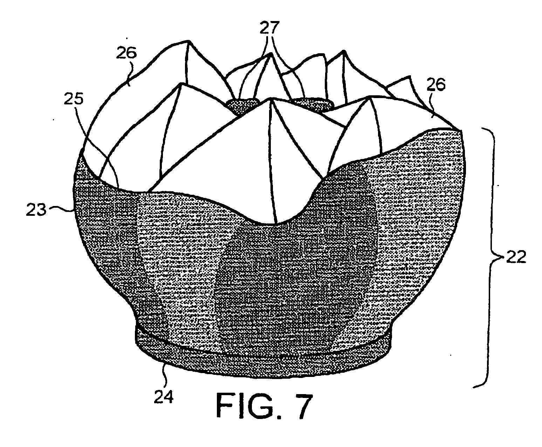

In working the method of the invention as outlined in Figures 2, 3, 5 and 6, a cup shaped product as shown in Figure 7 may be obtained. In this particular embodiment, the shell 22 is made of two different molten chocolates, white and milk, which are filled into the receptacle without being thoroughly mixed, which produces a marbled effect of the flower cup shaped shell 22. Said shell has a curved side wall 23 which, seen from the flat bottom 24 has a concave-convex shape. The upper edge 25 of the shell defines a sinuous line representing the corolla of a flower. At the top, a decorative topping 26 and sirup 27 applied with confectioner nozzles simulate the petals and the core of a rose. The end product is a composite frozen confectionery of appealing decorative aspect.

The end result is a composite confectionery product comprising a chocolate cone, truncated cone or cup with an ice confectionery filling and suitable complementary toppings, contained within and protected by a correspondingly shaped, close fitting protective packaging.

At the same time, the method provides accurate and consistent control over the thickness of the chocolate shell, and hence the quantity of chocolate used, while avoiding inadvertent variations in wall thickness. The use of the wrapper in the forming process streamlines production, and produces an aesthetically attractive form of complementary packaging which strongly suggests the shape of the concealed product. In all these respects, the ice confectionery product, and the method and apparatus for its production, provide practical and commercially significant improvements over the prior art.

## Claims

1. A composite frozen confectionery item including:
- a cone, truncated cone or cup shaped shell formed from a solid fat based composition and nestingly contained substantially within a close fitting protective packaging sheet of corresponding shape, the shell and packaging sheet each having an open end and a closed end and the shell forming a lining in substantially contiguous contact with an internal surface of the packaging sheet and
- a filling of ice confectionery up to a position adjacent the open end of the packaging sheet and extending beside the length of the shell and at least in part of its periphery being in contact with an internal surface of the packaging sheet.

2. A composite frozen confectionery item according to claim 1 in the shape of a cone.

3. A composite frozen confectionery item according to claim 1 in the shape of a cup representing the shape of a flower cup or corolla, with a curvated side wall of convex, concave or convex-concave shape with the base defining the closed end.

4. A composite frozen confectionery item according to claim 1, in which the packaging sheet ends with a substantially circular edge at its open end and the confectionery lining ends as a sinuous edge.

5. A composite frozen confectionery item according to any one of claims 1 to 4, which comprises a decorative topping and in which the packaging sheet is closed by a lid.

6. A method for producing a composite frozen confectionery item as claimed in claim 1 comprising an open ended cone, truncated cone or cup shaped confectionery item comprising a confectionery fat in a protective packaging sheet corresponding to the shape of the confectionery, said method including the steps of:
configuring the protective packaging sheet as a receptacle having an open end and a closed end;
supporting the receptacle with the open end disposer above the closed end; introducing a predetermined amount of edible molten confectionery material into the receptacle through the open end and permitting it to settle toward the closed end;
introducing a correspondingly shaped male die into the open end of the receptacle so as to displace the molten material around at least part of an interior surface of the receptacle;
cooling the molten material until it substantially solidifies in the form of a shell;
removing the die to reveal the confectionery item contained within the protective packaging sheet and
filling the receptacle containing the shell with a frozen confectionery up to a position adjacent the open end of the packaging sheet.

7. A method according to claim 6, comprising the further step of nesting the receptacle within a complementary female support die such that at least part of an outer surface of the receptacle adjacent the closed end is in contiguous surface contact with a corresponding inner surface of the support die.

8. A method according to claim 6, in which the female die is configured to support substantially the full extent of the shell.

9. A method according to claim 6, in which the male and female dies are concurrently brought into contact with the molten material and the packaging sheet respectively.

10. A method according to claim 6, which further comprises placing a decorative topping and closing the packaging sheet with a lid.

## Revendications

1. Produit de confiserie glacée composite comprenant :
- un enrobage en forme de cône, cône tronqué ou coupelle formé à partir d'une composition à base de corps gras solides et contenu par emboîtement sensiblement au sein d'une feuille d'emballage de protection ajustée serrée de forme correspondante, l'enrobage et la feuille d'emballage ayant tous deux une extrémité ouverte et une extrémité fermée et l'enrobage formant une chemise en contact sensiblement contigu avec une surface interne de la feuille d'emballage et
- un fourrage de glace jusqu'à une position adjacente à l'extrémité ouverte de la feuille d'emballage et s'étendant à côté et le long de l'enrobage et, au moins dans une partie de sa périphérie, étant en contact avec une surface interne de la feuille d'emballage.

2. Produit de confiserie glacée composite selon la revendication 1 sous la forme d'un cône.

3. Produit de confiserie glacée composite selon la revendication 1 sous la forme d'une coupelle ayant la forme d'une fleur ou d'une corolle, comportant une paroi latérale incurvée de forme convexe, concave ou convexe-concave, la base définissant l'extrémité fermée.

4. Produit de confiserie glacée composite selon la revendication 1, dans lequel la feuille d'emballage se termine par un bord sensiblement circulaire à son extrémité ouverte et la chemise de la confiserie se termine en un bord sinueux.

5. Produit de confiserie glacée composite selon l'une quelconque des revendications 1 à 4, qui comprend un nappage décoratif et dans lequel la feuille d'emballage est fermée par un couvercle.

6. Procédé pour fabriquer un produit de confiserie glacée composite selon la revendication 1, comprenant un produit de confiserie, à extrémité ouverte, en forme de cône, cône tronqué ou coupelle comprenant des corps gras de confiserie dans une feuille d'emballage de protection correspondant à la forme de la confiserie, ledit procédé comprenant les étapes consistant à :
configurer la feuille d'emballage de protection en un réceptacle ayant une extrémité ouverte et une extrémité fermée ;
supporter le réceptacle avec l'extrémité ouverte disposée au-dessus de l'extrémité fermée ;
introduire une quantité prédéterminée de matière de confiserie fondue comestible dans le réceptacle via l'extrémité ouverte et permettre à celle-ci de se déposer vers l'extrémité fermée ;
introduire un moule mâle de forme correspondante dans l'extrémité ouverte du réceptacle afin de déplacer la matière fondue autour d'au moins une partie d'une surface intérieure du réceptacle ;
refroidir la matière fondue jusqu'à ce qu'elle se solidifie sensiblement sous la forme d'un enrobage ;
ôter le moule pour révéler le produit de confiserie contenu au sein de la feuille d'emballage de protection et
remplir le réceptacle contenant l'enrobage d'une confiserie glacée jusqu'à une position adjacente à l'extrémité ouverte de la feuille d'emballage.

7. Procédé selon la revendication 6, comprenant l'étape supplémentaire d'emboîtement du réceptacle au sein d'un moule de support femelle complémentaire de manière qu'au moins une partie d'une surface externe du réceptacle adjacente à l'extrémité fermée soit en contact de surface contigu avec une surface interne correspondante du moule de support.

8. Procédé selon la revendication 6, dans lequel le moule femelle est configuré pour supporter sensiblement la totalité de l'étendue de l'enrobage.

9. Procédé selon la revendication 6, dans lequel les moules mâle et femelle sont simultanément mis en contact avec la matière fondue et la feuille d'emballage, respectivement.

10. Procédé selon la revendication 6, qui comprend en outre la disposition d'un nappage décoratif et la fermeture de la feuille d'emballage au moyen d'un couvercle.

## Patentansprüche

1. Zusammengesetzter gefrorener Konfektartikel, der beinhaltet:
- eine Schale in Kegel-, Kegelstumpf- oder Becherform, die aus einer festen Zusammensetzung auf Fettbasis geformt ist und als Einsatz im Wesentlichen innerhalb eines genau passenden Blattes einer Schutzverpackung von entsprechener Form enthalten ist, wobei die Schale und das Verpackungsblatt jeweils ein offenes Ende und ein geschlossenes Ende aufweisen und die Schale eine Auskleidung in im Wesentlichen durchgehendem Kontakt mit einer Innenoberfläche des Verpackungsblattes bildet, und
- eine Füllung aus Eiskonfekt bis zu einer Position in der Nähe des offenen Endes des Verpackungsblattes, die sich über die Länge der Schale hinaus erstreckt, wobei ihr Umfang wenigstens teilweise mit einer Innenoberfläche des Verpackungsblattes in Kontakt ist.

2. Zusammengesetzter gefrorener Konfektartikel nach Anspruch 1 in Form eines Kegels.

3. Zusammengesetzter gefrorener Konfektartikel nach Anspruch 1 in Form eines Bechers, der die Form eines Blumenkelchs oder einer Blütenkrone wiedergibt, mit einer gekrümmten Seitenwand von konvexer, konkaver oder konvex-konkaver Form, wobei die Basis das geschlossene Ende bildet.

4. Zusammengesetzter gefrorener Konfektartikel nach Anspruch 1, bei dem das Verpackungsblatt in einer im Wesentlichen kreisförmigen Kante an seinem offenen Ende endet und die Konfektauskleidung als sinusförmige Kante endet.

5. Zusammengesetzter gefrorener Konfektartikel nach irgendeinem der Ansprüche 1 bis 4, der ein dekoratives Topping aufweist und bei dem das Verpackungsblatt durch einen Deckel verschlossen ist.

6. Verfahren zur Herstellung eines zusammengesetzten gefrorenen Konfektartikels, wie er in Anspruch 1 beansprucht wird, der einen Konfektartikel von Kegel-, Kegelstumpf- oder Becherform umfasst, der ein Süßwarenfett in einem Blatt einer Schutzverpackung umfaßt, das der Form des Konfekts entspricht, wobei das Verfahren die Schritte beinhaltet:
Formen des Blatts der Schutzverpackung zu einem Aufnahmebehälter mit einem offenen Ende und einem geschlossenen Ende;
Abstützen des Aufnahmebehälters mit dem offenen Ende in einer Anordnung über dem geschlossenen Ende;
Einführen einer vorgegebenen Menge eines genießbaren schmelzflüssigen Konfektmaterials in den Aufnahmebehälter durch das offene Ende und Absitzenlassen in der Nähe des geschlossenen Endes;
Einführen einer entsprechend geformten Patrize in das offene Ende des Aufnahmebehälters, so dass das schmelzflüssige Material um wenigstens einen Teil einer Innenoberfläche des Aufnahmebehälters verdrängt wird;
Abkühlen des schmelzflüssigen Materials, bis es im Wesentlichen in Form einer Schale verfestigt ist;
Entfernen der Patrize, um den Konfektartikel, der innerhalb des Blattes der Schutzverpackung enthalten ist, freizugeben und
Befüllen des Aufnahmebehälters, der die Schale enthält, mit einem gefrorenen Konfekt bis zu einer Position in der Nähe des offenen Endes des Verpackungsblattes.

7. Verfahren nach Anspruch 6, das den weiteren Schritt der Anordnung des Aufnahmebehälters in einer komplementären Abstützmatrize auf eine solche Weize umfasst, das wenigstens ein Teil einer Aussenoberfläche des Aufnahmebehälters im Bereich des geschlossenen Endes sich in einem ununterbrochenen Oberflächenkontakt mit einer entsprechenden Innenoberfläche der Abstützmatrize befindet.

8. Verfahren nach Anspruch 6, wobei die Matrize so konfiguriert ist, dass sie im Wesentlichen die gesamte Länge der Schale abstützt.

9. Verfahren nach Anspruch 6, bei dem die Patrize und die Matrize im Wesentlichen gleichzeitig mit dem schmelzflüssigen Material bzw. dem Verpackungsblatt in Kontakt gebracht werden.

10. Verfahren nach Anspruch 6, das außerdem die Anordnung eines dekorativen Toppings sowie das Verschließen des Verpackungsblattes mit einem Deckel umfasst.
